# EUROPEAN PATENT SPECIFICATION

(11) **EP 2 947 119 B1**
(45) Date of publication and mention of the grant of the patent: **07.03.2018**
(21) Application number: 14740279.6
(22) Date of filing: 21.01.2014
(51) Int. Cl.: C08L 67/00, C08K 5/29

(54) **POLYESTER RESIN COMPOSITION**
POLYESTERHARZZUSAMMENSETZUNG
COMPOSITION DE RÉSINE DE POLYESTER

(30) Priority: 21.01.2013 JP 2013008775
(43) Date of publication of application: 25.11.2015
(73) Proprietor: Nisshinbo Chemical Inc., Chuo-ku Tokyo 103-8650 (JP)
(72) Inventor: ITOH, Takahiko, Chiba-shi Chiba 267-0056 (JP); YAMAZAKI, Yoshihiro, Chiba-shi Chiba 267-0056 (JP); TANIGUCHI, Akira, Chiba-shi Chiba 267-0056 (JP); KOTANI, Saori, Chiba-shi Chiba 267-0056 (JP)
(74) Representative: Leifert & Steffan
(86) International application number: PCT/JP2014/051152
(87) International publication number: WO 2014/112650

(56) References cited:
- EP-A1- 2 886 687
- WO-A1-2009/041054
- WO-A1-2010/018662
- WO-A1-2011/122080
- JP-A- 2007 231 194
- JP-A- 2010 006 869
- JP-A- 2011 168 756
- JP-A- 2011 195 668
- JP-A- 2012 036 391
- JP-A- 2012 036 392
- US-A1- 2011 114 172
- US-A1- 2012 101 200
- US-A1- 2012 165 447
- US-A1- 2013 012 631
- US-B2- 8 232 354

## Description

### Technical Field

The present invention relates to a polyester resin composition capable of suppressing generation of a highly toxic gas upon production of the composition.

### Background Art

Polyester resins have been extensively used in the application fields such as films and sheets because they are excellent in transparency, mechanical strength, melting stability, solvent resistance and recyclability. Further, in recent years, the polyester resins have also been used for housings of domestic appliances or OA equipments.

However, the polyester resins tend to readily undergo hydrolysis as compared to conventional general-purpose resins. For this reason, for the purpose of improving a hydrolysis resistance of the polyester resins, an aromatic carbodiimide has been conventionally added thereto.

For example, PTL1 discloses an aliphatic polyester resin composition that is improved in hydrolysis resistance by compounding an aromatic monocarbodiimide compound into an aliphatic polyester resin such as a polylactic acid.

### Citation List

### Patent Literature

PTL1: WO 2008/010355A

### Summary of Invention

### Technical Problem

In the polyester resin composition disclosed in PTL1 which is obtained by mixing the polyester resin and the aromatic carbodiimide, it is possible to suppress hydrolysis of the polyester resin. However, when mixing the polyester resin and the aromatic carbodiimide, there tends to occur such a problem that if these compounds are mixed at a temperature not lower than a melting temperature of the polyester resin, a carboxy group of the polyester resin is reacted with a carbodiimide group of the aromatic monocarbodiimide during the mixing to cause decomposition of the aromatic monocarbodiimide, so that a large amount of a highly toxic gas derived from an isocyanate group is generated, thereby causing deterioration in working environments and safety.

The present invention has been accomplished in view of the above conventional problem. Thus, an object of the present invention is to provide a polyester resin composition that is capable of suppressing generation of a highly toxic gas when mixing a polyester resin and an aromatic carbodiimide at a temperature not lower than a melting temperature of the polyester resin, in order to improve a hydrolysis stability of the polyester resin.

### Solution to Problem

As a result of the present inventors' earnest and intense studies on technologies for suppressing generation of the highly toxic gas, it has been found that a polyester resin composition including a polyester resin and an aromatic carbodiimide, and further an aliphatic polycarbodiimide, can be prevented from suffering from generation of a highly toxic decomposed gas derived from the aromatic carbodiimide, to a considerable extent.

Thus, in an aspect of the present invention, there is provided a polyester resin composition including a polyester resin (A), an aromatic carbodiimide (B) and an aliphatic polycarbodiimide (C), the polyester resin (A) being a polyester resin (a-1) produced from an aliphatic polycarboxylic acid and a dialkyl ester thereof, or an aliphatic polycarboxylic acid anhydride, and an aliphatic polyol, a polyester resin (a-2) produced from an aromatic polycarboxylic acid and a dialkyl ester thereof, or an aromatic polycarboxylic acid anhydride, and an aliphatic polyol, polyethylene terephthalate (a-4), or a polyester resin (a-5) constituted of a copolymer of the polyester resins (a-1) and (a-2), and a content of the polycarbodiimide (C) in the composition is from 0.7 to 10 parts by mass on the basis of 100 parts by mass of the polyester resin (A).

### Advantageous Effects of Invention

According to the present invention, it is possible to provide a polyester resin composition that is capable of suppressing generation of a highly toxic gas when mixing a polyester resin and an aromatic carbodiimide at a temperature not lower than a melting temperature of the polyester resin, in order to improve a hydrolysis stability of the polyester resin.

### Description of Embodiments

The polyester resin composition according to the present invention includes a specific polyester resin (A) and an aromatic carbodiimide (B), and further an aliphatic polycarbodiimide (C), and therefore is capable of effectively reducing an amount of a highly toxic gas generated which is derived from the aromatic carbodiimide.

### <Polyester Resin (A)>

In the present invention, as the polyester resin (A), there is used a polyester resin (a-1) produced from an aliphatic polycarboxylic acid and a dialkyl ester thereof, or an aliphatic polycarboxylic acid anhydride, and an aliphatic polyol, a polyester resin (a-2) produced from an aromatic polycarboxylic acid and a dialkyl ester thereof, or an aliphatic polycarboxylic acid anhydride, and an aliphatic polyol, polyethylene terephthalate (a-4), or a polyester resin (a-5) constituted of a copolymer of the polyester resins (a-1) and (a-2).

Examples of the aliphatic polycarboxylic acid used in the present invention include oxalic acid, malonic acid, succinic acid, glutaric acid, adipic acid, pimelic acid, suberic acid, azelaic acid, sebacic acid, decanedicarboxylic acid and dodecanedicarboxylic acid. In addition, there may also be used dialkyl esters of these acids, such as dimethyl esters and diethyl esters thereof, and aliphatic polycarboxylic acid anhydrides.

These aliphatic polycarboxylic acids, dialkyl esters thereof, and aliphatic polycarboxylic acid anhydrides may be used alone or in combination of any two or more thereof.

Of these compounds, preferred are succinic acid, adipic acid, dialkyl esters of succinic acid and adipic acid, succinic acid anhydride and adipic acid anhydride.

Examples of the aliphatic polyol used in the present invention include at least one compound selected from the group consisting of ethylene glycol, 1,4-butanediol, 1,6-hexanediol, decamethylene glycol, neopentyl glycol, propylene glycol, trimethylene glycol, 1,3-butanediol, octamethylene glycol, 1,4-cyclohexane dimethanol and trimethylol propane.

Of these aliphatic polyols, preferred is 1,4-butanediol.

Examples of the aromatic polycarboxylic acid used in the present invention include phthalic acid, isophthalic acid, terephthalic acid, trimellitic acid, naphthalene-2,6-dicarboxylic acid and naphthalene-2,3-dicarboxylic acid. In addition, there may also be used dialkyl esters of these acids, such as dimethyl esters and diethyl esters thereof, and aromatic polycarboxylic acid anhydrides.

These aromatic polycarboxylic acids, dialkyl esters thereof, and aromatic polycarboxylic acid anhydrides may be used alone or in combination of any two or more thereof.

Examples of the polyester resin (a-1) used in the present invention include at least one compound selected from the group consisting of polybutylene succinate, polybutylene succinate adipate and polyethylene succinate.

Of these compounds, preferred is polybutylene succinate.

Examples of the polyester resin (a-2) used in the present invention include at least one compound selected from the group consisting of polyethylene terephthalate, polybutylene terephthalate and polyethylene naphthalate.

Examples of the polyester resin (a-5) used in the present invention include at least one compound selected from the group consisting of polyethylene succinate terephthalate, polyethylene adipate terephthalate, polybutylene adipate terephthalate and polytetramethylene adipate terephthalate.

Of these compounds, preferred is polybutylene adipate terephthalate.

### <Aromatic Carbodiimide (B)>

The aromatic carbodiimide (B) is not particularly limited as long as the carbodiimide contains a carbodiimide group directly bonded to an aromatic ring, and examples of the aromatic carbodiimide (B) include an aromatic monocarbodiimide and an aromatic polycarbodiimide.

As the aromatic monocarbodiimide, there may be mentioned those compounds having a basic structure represented by the following general formula (I):

R-N=C=N-R' (I)

wherein R and R' are each independently an aromatic group.

Specific examples of the aromatic monocarbodiimide include at least one compound selected from the group consisting of diphenyl carbodiimide, bis(methylphenyl)carbodiimide, bis(methoxyphenyl)carbodiimide, bis(nitrophenyl)carbodiimide, bis(dimethylphenyl)carbodiimide, bis(diisopropylphenyl)carbodiimide, bis(di-tert-butylphenyl)carbodiimide and bis(triphenylsilyl)carbodiimide.

Of these compounds, from the viewpoint of improving a hydrolysis resistance of the polyester resin, preferred is bis(diisopropylphenyl)carbodiimide.

As the aromatic polycarbodiimide, there may be mentioned those compounds having a basic structure represented by the following general formula (II): 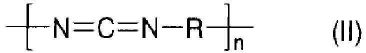 wherein n is an integer of 2 or more, and R is an aromatic group.

The aromatic polycarbodiimide may be synthesized, for example, by subjecting various organic diisocyanates to decarboxylation condensation reaction by using an organic phosphorus-based compound or an organic metal compound as a catalyst.

Examples of the organic diisocyanates used as a raw material for production of the aromatic polycarbodiimide include at least one compound selected from the group consisting of 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, 3,3',5,5'-tetraisopropyl biphenyl-4,4'-diisocyanate and 1,3,5-triisopropylbenzene-2,4-diisocyanate.

Of these compounds, from the viewpoints of ensuring a high safety and imparting an excellent hydrolysis resistance to the polyester resin composition, preferred is 1,3,5-triisopropylbenzene-2,4-diisocyanate.

The content of the aromatic carbodiimide (B) in the polyester resin composition is preferably from 0.1 to 10 parts by mass, more preferably from 0.5 to 7 parts by mass, and still more preferably from 0.7 to 3 parts by mass, on the basis of 100 parts by mass of the polyester resin (A), from the viewpoint of improving a hydrolysis resistance of the composition.

### <Aliphatic Polycarbodiimide (C)>

The aliphatic polycarbodiimide (C) is a polycarbodiimide containing 2 or more carbodiimide groups each bonded to a carbon atom other than those carbon atoms present in an aromatic ring, in a molecule thereof.

The aliphatic polycarbodiimide may be synthesized, for example, by subjecting various organic diisocyanates to decarboxylation condensation reaction by using an organic phosphorus-based compound or an organic metal compound as a catalyst.

The degree of polymerization of the aliphatic polycarbodiimide is preferably from 2 to 20, and more preferably from 6 to 8, from the viewpoint of suppressing generation of a toxic gas.

Examples of the diisocyanates used for production of the aliphatic polycarbodiimide include at least one compound selected from the group consisting of hexamethylene diisocyanate, cyclohexane-1,4-diisocyanate, isophorone diisocyanate, 4,4'-dicyclohexylmethane diisocyanate, methyl cyclohexane diisocyanate, 1,3-bis(isocyanato-methyl)cyclohexane, xylylene diisocyanate and tetramethyl xylylene diisocyanate.

Of these compounds, from the viewpoint of effectively suppressing generation of a toxic gas, preferred is 4,4'-dicyclohexylmethane diisocyanate.

The content of the aliphatic polycarbodiimide (C) in the polyester resin composition is from 0.7 to 10 parts by mass, preferably from 0.7 to 3 parts by mass, on the basis of 100 parts by mass of the polyester resin (A), from the viewpoint of effectively exhibiting the effect of suppressing generation of a toxic gas.

### <Additives>

The polyester resin composition of the present invention may also contain additives in addition to the polyester resin (A), the aromatic carbodiimide (B) and the aliphatic polycarbodiimide (C) unless the effects of the present invention are adversely affected by addition thereof.

Examples of the additives include an inorganic filler, a reinforcing material, a colorant (such as titanium oxide), a stabilizer (such as a radical scavenger and an antioxidant), a flame retardant (such as known metal hydrates, halogen-based flame retardants and phosphorus-based flame retardants), a known nucleating agent (such as talc), an antibacterial agent and a mildew-proof agent.

Specific examples of the inorganic filler usable in the present invention include silica, alumina, sand, clay and slag. Specific examples of the reinforcing material usable in the present invention include acicular inorganic substances and the like. Specific examples of the antibacterial agent usable in the present invention include a silver ion, a copper ion and a zeolite containing these ions.

### <Mixing Method and Mixing Order>

The means for mixing the respective components is not particularly limited, and these components may be melted and mixed using known mixers, for example, a single-screw or twin-screw extruder, a roll mixer, etc.

The mechanism of suppressing generation of a toxic gas from the polyester resin composition according to the present invention is considered as follows. That is, the mechanism of suppressing generation of a toxic gas derived from an isocyanate group is considered to be that a carboxy group present in the polyester resin (A) is preferentially reacted with a carbodiimide group of the aliphatic polycarbodiimide (C) having a high reactivity, so that substantially a whole amount of the aromatic carbodiimide (B) remains as such in the polyester resin (A) without reacting with the carboxy group of the polyester resin (A), and further since the aliphatic polycarbodiimide (C) is free from decomposition by the reaction with the polyester resin (A), generation of a large amount of a highly toxic gas can be inhibited.

Therefore, from the viewpoint of effectively suppressing generation of a toxic gas, the order of mixing of the respective components is preferably controlled such that the polyester resin (A) and the aromatic carbodiimide (B) are mixed in the presence of the aliphatic polycarbodiimide (C).

As the specific mixing method concerning the mixing order of the respective components, there may be mentioned a method in which the component (A) is mixed with the component (B) and the component (C) at the same time, a method in which after mixing the components (A) and (C), the resulting mixture is mixed with the component (B), and a method in which after mixing the components (A) and (C) and mixing the components (B) and (C), respectively, the resulting mixtures are mixed together.

Further, there may also be used a method in which a master batch prepared by compounding the component (B) or the component (C) solely or both the component (B) and the component (C) into the component (A) is used and mixed in place of the component (B) or the component (C).

Of these methods, from the viewpoint of a high production efficiency, preferred are the method in which the component (A) is mixed with the component (B) and the component (C) at the same time, and the method in which after mixing the components (A) and (C), the resulting mixture is mixed with the component (B), and more preferred is the method in which after mixing the components (A) and (C), the resulting mixture is mixed with the component (B).

### <Applications>

The polyester resin composition of the present invention can be processed into molded articles used in the application fields such as electric and electronic equipments such as housings for electrical appliances, building materials, automobile parts, sundries, medical products, agricultural products, etc., by an injection molding method, a film forming method, a blow molding method, a foam molding method or the like.

### <Molding Method>

The method of molding the polyester resin composition of the present invention is not particularly limited, and there may be adopted any suitable molding methods that are necessary to produce ordinary electric and electronic equipments, including known molding methods such as an injection molding method, an injection compression molding method and a compression molding method. The temperature used upon melting and mixing or upon molding in these methods may be adjusted to not lower than a melting temperature of the polyester resin.

### Examples

The present invention will be described in more detail below by referring to the following Examples and Comparative Examples. It should be noted, however, that the following Examples, etc., are only illustrative and not intended to limit the invention thereto.

### Synthesis Example 1: Production of Aliphatic Polycarbodiimide

A reaction vessel equipped with a reflux condenser and a stirrer was charged with 100 parts by mass of 4,4'-dicyclohexylmethane diisocyanate and 0.5 part by mass of a carbodiimidation catalyst (3-methyl-1-phenyl-2-phospholene-1-oxide), and the contents of the reaction vessel were stirred at 185°C in a nitrogen gas flow for 15 h, thereby obtaining an isocyanate-terminated poly-4,4'-dicyclohexylmethane carbodiimide.

As a result of subjecting the resulting reaction product to measurement of infrared (IR) absorption spectrum, it was confirmed that an absorption peak attributed to a carbodiimide group at a wavelength of about 2150 cm⁻¹ was observed. In addition, as a result of measurement of a percentage (%) of NCO in the reaction product, it was confirmed that the NCO percentage (%) was 4.88% (polymerization degree: 6.7).

Next, the resulting isocyanate-terminated poly-4,4'-dicyclohexylmethane carbodiimide was heated to 120°C, and then 40 parts by mass of polyethylene glycol monomethyl ether (average molecular weight: 400) was added thereto, and the resulting mixture was heated to 150°C and reacted at that temperature for 5 h while stirring.

The resulting reaction mixture was subjected to measurement of infrared (IR) absorption spectrum, and after confirming dissipation of IR absorption of an isocyanate group at a wavelength of 2200 to 2300 cm⁻¹, the reaction product was taken out of the reaction vessel, and cooled to room temperature, thereby obtaining a light-yellow transparent viscous aliphatic polycarbodiimide.

### <Examples in which Components (A), (B) and (C) are Mixed at the Same Time>

### Example 1

One hundred parts by mass of a PET resin "TRN-8550FF" available from Teijin Chemicals Ltd., was melted at 270°C using a Lab Mixer, and then 1 part by mass of the aliphatic polycarbodiimide obtained in Synthesis Example 1 and 1 part by mass of "STABAXOL 1LF" (aromatic monocarbodiimide) available from Rhein Chemie were added thereto at the same time, and the resulting mixture was mixed for 2.5 min.

After mixing the mixture for 2.5 min, the resulting resin mixture was immediately taken out of the mixer, and 250 mL of a gas generated therefrom was sampled and adsorbed by an adsorbent to subject the thus adsorbed substance to GC-MS analysis. The concentration of the decomposed gas was calculated from a peak of 2,6-diisopropyl phenyl isocyanate as a decomposed gas component observed at a retention time of 10.1 min. The results are shown in Table 1.

### Examples 2 to 4

The same analyzing procedure as in Example 1 was repeated except for using the compounding ratios and conditions as shown in Table 1. The results are shown in Table 1.

### <Examples in which after Mixing Components (A) and (C), the Resulting Mixture is Mixed with Component (B)>

### Example 5

One hundred parts by mass of a PBS (polybutylene succinate) resin "BIONOLLE 1001MD" available from Showa Denko K.K., was melted at 270°C using a Lab Mixer. Thereafter, 1 part by mass of the aliphatic polycarbodiimide obtained in Synthesis Example 1 was added to the melted PBS resin, followed by mixing the resulting mixture for 1 min (mixing time 1), and then 1 part by mass of "STABAXOL 1LF" (aromatic monocarbodiimide) available from Rhein Chemie was added thereto, followed by further mixing the resulting mixture for 2.5 min (mixing time 2).

After mixing the above mixture for 2.5 min, the resulting resin mixture was immediately taken out of the mixer, and 250 mL of a gas generated therefrom was sampled and adsorbed by an adsorbent to subject the thus adsorbed substance to GC-MS analysis. The concentration of the decomposed gas was calculated from a peak of 2,6-diisopropyl phenyl isocyanate as a decomposed gas component observed at a retention time of 10.1 min. The results are shown in Table 2.

### Example 6

The same analyzing procedure as in Example 5 was repeated except for using the compounding ratios and conditions as shown in Table 2. The results are shown in Table 2.

### Comparative Example 1

One hundred parts by mass of a PET resin "TRN-8550FF" available from Teijin Chemicals Ltd., was melted at 270°C using a Lab Mixer, and then 1 part by mass of "STABAXOL 1LF" (aromatic carbodiimide) available from Rhein Chemie was added thereto, and the resulting mixture was mixed for 2.5 min.

After mixing the above mixture for 2.5 min, the resulting resin mixture was immediately taken out of the mixer, and 250 mL of a gas generated therefrom was sampled and adsorbed by an adsorbent to subject the thus adsorbed substance to GC-MS analysis. The concentration of the decomposed gas was calculated from a peak of 2,6-diisopropyl phenyl isocyanate as a decomposed gas component observed at a retention time of 10.1 min. The results are shown in Table 1.

### Comparative Examples 2 to 4

The same analyzing procedure as in Comparative Example 1 was repeated except for using the compounding ratios and conditions as shown in Table 1. The results are shown in Table 1.

**[Table 1]**

| | Examples | | | | Comparative Examples | | | |
|---|---|---|---|---|---|---|---|---|
| | 1 | 2 | 3 | 4 | 1 | 2 | 3 | 4 |
| Polyester resin (A) | PET | PET | PBS | PHA | PET | PBS | PHA | PLA |
| Aromatic monocarbodiimide (B)^{*1} | 1 | 1 | 1 | 1 | 1 | 1 | 1 | 1 |
| Aliphatic polycarbodiimide (C)^{*1} | 1 | 0.7 | 1 | 1 | - | - | - | - |
| Mixing time [min] | 2.5 | 2.5 | 2.5 | 2.5 | 2.5 | 2.5 | 2.5 | 7 |
| Concentration of decomposed gas [µg/L] | 4.8 | 8.1 | 15.0 | 9.4 | 24.1 | 31.0 | 10.3 | 21.5 |

| | | | | | | | | |
|---|---|---|---|---|---|---|---|---|
| Note *1: Compounding ratios [parts by mass] on the basis of 100 parts by mass of the component (A) | | | | | | | | |

**[Table 2]**

| | Examples | |
|---|---|---|
| | 5 | 6 |
| Polyester resin (A) | PBS | PHA |
| Aliphatic polycarbodiimide (C)^{*1} | 1 | 1 |
| Mixing time 1 [min] | 1 | 1 |
| Aromatic monocarbodiimide (B)^{*1} | 1 | 1 |
| Mixing time 2 [min] | 2.5 | 2.5 |
| Concentration of decomposed gas [µg/L] | 2.6 | >1.0 |

| | | |
|---|---|---|
| Note *1: Compounding ratios [parts by mass] on the basis of 100 parts by mass of the component (A) | | |

### Regarding Symbols in Tables

PET: Polyethylene terephthalate "TRN-8550FF" available from Teijin Chemicals Ltd.
PBS: Polybutylene succinate "BIONOLLE 1001MD" available from Showa Denko K.K. (an ester-based resin produced from an aliphatic polycarboxylic acid and an aliphatic polyol)
PHA: Polyhydroxybutanoic acid "EM5400A" available from Ecomann Technology Co., Ltd. (an ester resin produced from 3-hydroxybutanoic acid)
PLA: Polylactic acid "Ingeo Biopolymer 4032D" available from Nature Works LLC

As is apparent from the results of the above Examples and Comparative Examples, according to the polyester resin composition of the present invention, it is possible to effectively suppress generation of a highly toxic gas upon mixing a polyester resin and an aromatic carbodiimide.

## Claims

1. A polyester resin composition comprising a polyester resin (A), an aromatic carbodiimide (B) and an aliphatic polycarbodiimide (C),
wherein the polyester resin (A) is a polyester resin (a-1) produced from an aliphatic polycarboxylic acid and a dialkyl ester thereof, or an aliphatic polycarboxylic acid anhydride, and an aliphatic polyol, a polyester resin (a-2) produced from an aromatic polycarboxylic acid and a dialkyl ester thereof, or an aromatic polycarboxylic acid anhydride, and an aliphatic polyol, polyethylene terephthalate (a-4), or a polyester resin (a-5) constituted of a copolymer of the polyester resins (a-1) and (a-2),and
a content of the aliphatic polycarbodiimide (C) in the composition is from 0.7 to 10 parts by mass on the basis of 100 parts by mass of the polyester resin (A).

2. The polyester resin composition according to claim 1, wherein a content of the aromatic carbodiimide (B) in the composition is from 0.1 to 10 parts by mass on the basis of 100 parts by mass of the polyester resin (A).

3. The polyester resin composition according to claim 1 or 2, wherein the aliphatic polycarbodiimide (C) is produced from 4,4'-dicyclohexylmethane diisocyanate.

4. The polyester resin composition according to any one of claims 1 to 3, wherein a content of the aromatic carbodiimide (B) in the composition is from 0.7 to 3 parts by mass on the basis of 100 parts by mass of the polyester resin (A).

5. The polyester resin composition according to any one of claims 1 to 4, wherein a content of the aliphatic polycarbodiimide (C) in the composition is from 0.7 to 3 parts by mass on the basis of 100 parts by mass of the polyester resin (A).

## Patentansprüche

1. Polyesterharz-Zusammensetzung umfassend ein Polyesterharz (A), ein aromatisches Carbodiimid (B) und ein aliphatisches Polycarbodiimid (C),
wobei das Polyesterharz (A) ein Polyesterharz (a-1), das aus einer aliphatischen Polycarbonsäure und einem Dialkylester davon, oder einem aliphatischen Polycarbonsäureanhydrid, und einem aliphatischen Polyol hergestellt ist, ein Polyesterharz (a-2), das aus einer aromatischen Polycarbonsäure und einem Dialkylester davon, oder einem aromatischen Polycarbonsäureanhydrid, und einem aliphatischen Polyol hergestellt ist, Polyethylenterephthalat (a-4), oder ein Polyesterharz (a-5), das aus einem Copolymer der Polyesterharze (a-1) und (a-2) hergestellt ist, ist, und
der Gehalt des aliphatischen Polycarbodiimids (C) in der Zusammensetzung von 0,7 bis 10 Massenteile bezogen auf 100 Massenteile des Polyesterharzes (A) beträgt.

2. Polyesterharz-Zusammensetzung nach Anspruch 1, wobei der Gehalt des aromatischen Carbodiimids (B) in der Zusammensetzung von 0,1 bis 10 Massenteile bezogen auf 100 Massenteile des Polyesterharzes (A) beträgt.

3. Polyesterharz-Zusammensetzung nach Anspruch 1 oder 2, wobei das aliphatische Polycarbodiimid (C) aus 4,4'-Dicyclohexylmethan-diisocyanat hergestellt wird.

4. Polyesterharz-Zusammensetzung nach einem der Ansprüche 1 bis 3, wobei der Gehalt des aromatischen Carbodiimids (B) in der Zusammensetzung von 0,7 bis 3 Massenteile bezogen auf 100 Massenteile des Polyesterharzes (A) beträgt.

5. Polyesterharz-Zusammensetzung nach einem der Ansprüche 1 bis 4, wobei der Gehalt des aliphatischen Polycarbodiimids (C) in der Zusammensetzung von 0,7 bis 3 Massenteile bezogen auf 100 Massenteile des Polyesterharzes (A) beträgt.

## Revendications

1. Composition de résine de polyester comprenant une résine de polyester (A), un carbodiimide aromatique (B) et un polycarbodiimide aliphatique (C),
dans laquelle la résine de polyester (A) est une résine de polyester (a-1) fabriquée d'un acide polycarboxylique aliphatique et un ester dialkylique de celui-ci, ou d'un anhydride d'un acide polycarboxylique aliphatique, et un polyol aliphatique ; une résine de polyester (a-2) fabriquée d'un acide polycarboxylique aromatique et un ester dialkylique de celui-ci, ou d'un anhydride d'un acide polycarboxylique aromatique, et un polyol aliphatique ; le polyéthylène téréphtalate (a-4) ; ou une résine de polyester (a-5) constituée par un copolymère de résines de polyester (a-1) et (a-2), et
la teneur en polycarbodiimide aliphatique (C) dans la composition est de 0,7 à 10 parties en masse sur la base de 100 parties en masse de la résine de polyester (A).

2. Composition de résine de polyester selon la revendication 1, dans laquelle la teneur en carbodiimide aromatique (B) dans la composition est de 0,1 à 10 parties en masse sur la base de 100 parties en masse de la résine de polyester (A).

3. Composition de résine de polyester selon la revendication 1 ou 2, dans laquelle le polycarbodiimide aliphatique (C) est fabriqué du diisocyanate de 4,4'-dicyclohexylméthane.

4. Composition de résine de polyester selon l'une quelconque des revendications 1 à 3, dans laquelle la teneur en carbodiimide aromatique (B) dans la composition est de 0,7 à 3 parties en masse sur la base de 100 parties en masse de la résine de polyester (A).

5. Composition de résine de polyester selon l'une quelconque des revendications 1 à 4, dans laquelle la teneur en carbodiimide aliphatique (C) dans la composition est de 0,7 à 3 parties en masse sur la base de 100 parties en masse de la résine de polyester (A).
